# EUROPÄISCHE PATENTANMELDUNG

(11) **EP 3 435 299 A1**
(43) Veröffentlichungstag der Anmeldung: **30.01.2019**
(21) Anmeldenummer: 17183520.0
(22) Anmeldetag: 27.07.2017
(51) Int. Cl.: G06Q 10/06

(54) **VERFAHREN ZUR PLANUNG UND/ODER ZUM BETREIBEN EINER TECHNISCHEN ANLAGE**

(71) Anmelder: Siemens Aktiengesellschaft, 80333 München (DE)
(72) Erfinder: Drumm, Oliver, 76344 Eggenstein-Leopoldshafen (DE); Wolf, Gerrit, 76187 Karlsruhe (DE)

(57) **Zusammenfassung**

Die Erfindung betrifft ein Verfahren zur Planung und/oder zum Betreiben einer technischen Anlage (1), bei dem
- von einem Anlagenbetreiber mittels wenigstens eines softwarebasierten Planungswerkzeugs (4) eine Planung einer technische Anlage (1) durchgeführt wird,
- im Rahmen der Planung erhaltene und/oder während des Betriebs der Anlage erfasste Anlagendaten (5) in einer Cloud (2) bereitgestellt werden,
- zumindest ein Teil der in der Cloud (2) bereitgestellten Anlagendaten (5) von dem Anlagenbetreiber derart freigegeben wird, dass von einem oder mehreren externen Dienstleistern (3) auf diese zugegriffen werden kann, wobei der Anlagenbetreiber in wenigstens einem zur Planung der Anlage verwendeten Planungswerkzeug (4), insbesondere unter Verwendung wenigstens einer einen Teil des Planungswerkzeugs (4) bildenden Anwendung auswählt, welche Anlagendaten (5) freigegeben werden, und
- wenigstens ein externer Dienstleister (3) auf ihm in der Cloud (2) freigegebene Anlagendaten (5) zugreift und auf Basis freigegebener Anlagendaten (5) wenigstens einen Optimierungsvorschlag für die Anlage (1) erarbeitet, und den Optimierungsvorschlag an den Anlagenbetreiber insbesondere über die Cloud (2) übermittelt.

## Beschreibung

Die Erfindung betrifft ein Verfahren zur Planung und/oder zum Betreiben einer technischen Anlage.

In der immer stärker vernetzten Welt spielen solche Dienstleistungen, die in Bezug auf Daten durchgeführt werden eine immer größere Rolle. Daten, in Bezug auf welche Dienstleistungen von Interesse sind, können etwa in Form von eine technische Anlage betreffenden Anlagendaten gegeben sein. Bei technischen Anlagen kann es sich zum Beispiel um fertigungs- und/oder verfahrenstechnische Anlage und/oder solche zur Erzeugung bzw. Verteilung elektrischer Energie handeln.

Es kann für einen Planer bzw. Betreiber einer Anlage von Interesse sein, einen Teil seiner Anlagendaten einem oder mehreren externen, insbesondere unternehmensfremden Dienstleistern zur Verfügung zu stellen, um auf externe Ressourcen zurückzugreifen.

Für eine Bereitstellung von Daten an Dritte kann auf eine Cloud-Lösung zurückgegriffen werden. Deren Einsatz macht es insbesondere möglich, Daten einem auch größeren externen Dienstleisterkreis bereit zu stellen. Unter einer "Cloud-Lösung" oder auch "Cloud-Computing" ist dabei der aus dem Stand der Technik hinlänglich bekannte Ansatz zu verstehen, bei dem ein Teil der eigentlichen informationstechnischen (IT-)Landschaft nicht mehr nur auf Nutzerseite betrieben oder am Ort des Nutzers bereitgestellt, sondern (auch) auf eine nutzerexterne IT-Landschaft zurückgegriffen wird, die beispielsweise bei einem oder mehreren externen Anbietern, die grafisch entfernt angesiedelt sein können, etwa als Dienst gemietet wird. In der Cloud können unter anderem Datenspeicherplatz, Rechenkapazität sowie fertige Software genutzt werden. Die Anwendungen und/oder Daten befinden sich, wenn ein Nutzer auf eine Cloud zugreift, nicht mehr (nur) auf einem oder mehreren seiner lokalen Rechner oder einem (unternehmens-)internen Rechenzentrum, sondern in der Cloud. Es kann sein, dass eine Cloud Teil des Internets ist oder dieses umfasst.

Es ist selbstverständlich, dass der Geheimhaltung von sensiblen Daten auch im Bereich der Anlagenplanung und/oder des Anlagenbetriebes allerhöchste Priorität zukommt. Ein Eigentümer von Anlagendaten wird immer nur Teile seiner Anlagendaten offenlegen wollen, insbesondere, um sein Firmen-Knowhow schützen zu können. Daher ist es wichtig, dass der Eigentümer von Anlagendaten immer die Macht über die Freigabe von Daten an Dritte besitzt. Der Dateneigentümer muss insbesondere die Freigabe jederzeit einfach erteilen oder auch wieder entziehen können. Bei der Gradwanderung der Datenoffenlegung ist ein geschicktes Freigabeverfahren der Anlagedaten erforderlich. Eine Möglichkeit hierzu besteht bisher nicht bereit.

Es ist daher Aufgabe der vorliegenden Erfindung, ein Verfahren der eingangs genannten Art anzugeben, welches eine Anlagenplanung und/oder einen Anlagenbetrieb unter Rückgriff auch auf externe Ressourcen ermöglicht, welches sich komfortabel und einfach durchführen lässt und dem Anlagenbetreiber gleichzeitig ein hohes Maß an Sicherheit bietet.

Diese Aufgabe wird gelöst durch ein Verfahren zur Planung und/oder zum Betreiben einer technischen Anlage, bei dem
- von einem Anlagenbetreiber mittels wenigstens eines softwarebasierten Planungswerkzeugs eine Planung einer technische Anlage durchgeführt wird,
- im Rahmen der Planung erhaltene und/oder während des Betriebs der Anlage erfasste Anlagendaten in einer Cloud bereitgestellt werden,
- zumindest ein Teil der in der Cloud bereitgestellten Anlagendaten von dem Anlagenbetreiber derart freigegeben wird, dass von einem oder mehreren externen Dienstleistern auf diese zugegriffen werden kann, wobei der Anlagenbetreiber in wenigstens einem zur Planung der Anlage verwendeten Planungswerkzeug, insbesondere unter Verwendung wenigstens einer einen Teil des Planungswerkzeugs bildenden Anwendung auswählt, welche Anlagendaten freigegeben werden, und
- wenigstens ein externer Dienstleister auf ihm in der Cloud freigegebene Anlagendaten zugreift und auf Basis freigegebener Anlagendaten wenigstens einen Optimierungsvorschlag für die Anlage erarbeitet, und den Optimierungsvorschlag an den Anlagenbetreiber insbesondere über die Cloud übermittelt.

Die vorliegende Erfindung basiert auf dem Gedanken, dass eine Auswahl von Anlagedaten zur Freigabe an externe Dienstleister besonders komfortabel, zweckmäßig sowie sicher im Kontext der Anlage erfolgen kann. Die Semantik der Daten im Kontext der Anlage ist in einem oder mehreren softwarebasierten Planungswerkzeug(en), das bzw. die für die Planung der Anlage verwendet wird bzw. wurde, hinterlegt. Erfindungsgemäß erfolgt die Freigabe von Anlagendaten an externe Dienstleister in einer Cloud in dem bzw. den Planungswerkzeug(en). Die Auswahl in der Umgebung des bzw. der Planungswerkzeuge kann zügig und durch den Kontextbezug besonders intuitiv erfolgen. Insbesondere ist - alternativ zu einer Einzeldatenzuweisung und - freigabe - eine auch massenhafte kontextbezogene Datenfreigabe, die sehr effizient erfolgen kann, möglich. Dabei hat der Anlagenbetreiber zu allen Zeiten die Herrschaft und eine gute Übersicht über seine Daten und Fehler werden vermieden, so dass ein hohes Maß an Sicherheit gewährleistet wird. Aufgrund der hohen Sicherheit bei gleichzeitig großem Komfort ist mit einer hohen Akzeptanz zu rechnen.

Da im Rahmen des erfindungsgemäßen Verfahrens auf eine Cloud zurückgegriffen wird, ist es u.a. möglich, dass neue Anwendungen in Bezug auf die Daten einer Anlage nicht wie bisher durch den Dateneigentümer selber direkt in Auftrag gegeben werden müssen. Der zentrale Wunsch des Dateneigentümers an einen oder mehrere externen Dienstleister, etwa Anwendungsentwickler, kann die Optimierung seiner Anlage - in beliebiger Hinsicht - sein, ohne dass der Anlagenbetreiber dabei schon eine klare Vorstellung eines Lösungsansatzes hat. Werden Teile von Anlagendaten einfach offengelegt und einem insbesondere größeren Kreis externer Dienstleistern zur Verfügung gestellt, haben diese die Chance und Freiheit, auf Basis von bereitgestellten Anlagendaten Ideen für Anwendungen und Lösungen zu entwickeln und diese dem Eigentümer der Anlagendaten anzubieten. Durch eine solche Vorgehensweise, die aus anderen Bereichen auch unter dem Begriff "crowdsourcing" bekannt ist, können schneller viele innovative Lösungen gegenüber der Anlagendatenverwendung nur unternehmensintern oder auch der klassischen Vergabe einzelner Auftragsarbeiten geschaffen werden. So wird es unter Durchführung des erfindungsgemäßen Verfahrens möglich, bessere Ergebnisse zu erzielen.

Unter einem Planungswerkzeug ist jede Art von Software-Tool zu verstehen, das der Planung einer technischen Anlage oder auch nur eines Teils einer solchen dienen kann. Mit einem oder mehreren solchen wird insbesondere eine Anlage oder ein Anlagenteil- etwa vor deren Bau und/oder zu einem späteren Zeitpunkt - softwarebasiert abgebildet, beispielsweise softwarebasiert ein Modell einer solchen erstellt, welches u.a. die Struktur der Anlage wiedergibt. Die Anlagenplanung, insbesondere das hierdurch erhaltene Anlagenmodell umfasst eine Vielzahl von die Anlage betreffenden Anlagendaten, die u.a. in Form von Objekten abgelegt sein können.

Ein Planungswerkzeug kann beispielsweise in an sich bekannter Weise eine Mehrzahl von Planungs- und/oder Automatisierungsanwendungen umfassen. Bei dem oder den zum Einsatz kommenden Planungswerkzeug(en) kann es sich sowohl um Anlagen-Planungswerkzeuge als auch um Planungswerkzeuge im Leitsystem handeln. Rein beispielhaft sei für ein Anlagen-Planungswerkzeug das Software-Tool "COMOS" der Anmelderin genannt, welches am Markt verfügbar ist. Dieses kann etwa der Abbildung eines vollständigen Lebenszyklus einer Anlage von der Planung bis zum Betrieb dienen. Als Beispiel für ein Planungswerkzeug im Leitsystem sei das ebenfalls von der Anmelderin am Markt angebotene Software-Tool "SIMATIC PCS7" genannt. Jegliche anderen Planungswerkzeuge, die dem vorstehend bezeichneten Zwecke dienen können, sind gleichermaßen geeignet, um im Rahmen des erfindungsgemäßen Verfahrens zum Einsatz kommen.

Unter den Begriff Anlagendaten fallen sämtliche im Zusammenhang mit einer technischen Anlage stehende Daten, die zu beliebigen Zeitpunkten etwa während einer Planung und/oder während eines Betriebes und/oder während Stillstandzeiten erhalten bzw. erfasst wurden bzw. werden. Bei den Anlagendaten kann es sich insbesondere sowohl um solche handeln, die aus einer mittels wenigstens einem Planungswerkzeug durchgeführte Anlagenplanung hervorgehen bzw. hervorgegangen sind, etwa im Rahmen einer Anlagenmodell-Erstellung generiert wurden, und beispielsweise die Hardware und/oder Anlagenstruktur sowie die Automatisierung der geplanten Anlage betreffen können, als auch um Daten einer bereits real existierenden Anlage, die beispielsweise bereits im Betrieb sein kann, so dass Runtime-Daten oder auch eine bereits durchgeführte Reparatur der Anlage betreffende Daten als Anlagendaten zur Verfügung stehen. Dies sind lediglich nicht einschränkend zu verstehende Beispiele für Daten, die im Zusammenhang mit einer Anlage.

Bei den Anlagendaten kann es sich weiterhin sowohl um statische, beispielsweise den physischen Aufbau einer technischen Anlage betreffende Daten, als auch dynamische, beispielsweise die Anlagenautomatisierung oder den Anlagenbetrieb betreffende Daten handeln. Dynamische Daten entstehen insbesondere in den feldnahen Komponenten einer Anlage. Zu diesen zählen etwa die PLT-Stellen, insbesondere die Messwerte vorhandener Sensoren und/oder die Stellwerte vorhandener Aktoren einer Anlage. Bei den statischen Daten kann es sich beispielsweise um bestimmte Anlagenkomponenten bzw. die Anlagenstruktur handeln.

Im Rahmen des erfindungsgemäßen Verfahrens werden einem oder mehreren externen Dienstleistern besonders bevorzugt die Werte der PLT-Stellen, also Mess- und Stellwerte als Anlagendaten freigegeben, so dass der oder die Dienstleister diese verwenden können.

Von bzw. in dem oder den Planungswerkzeug(en) werden bzw. sind die Anlagendaten insbesondere in Form von Objekten gespeichert.

Was die Anlage angeht ist zu beachten, dass es sich sowohl um eine (bisher) ausschließlich virtuell in Form einer Anlagenplanung bzw. eines Anlagenmodells vorhandene Anlage als auch um eine bereits erbaute Anlage handeln kann, welche beispielsweise während ihres gesamten Lebenszyklus in der Anlagenplanung nachgehalten, insbesondere durch ein Modell, in das auch sämtliche Änderungen einer ggf. bereits physisch vorhandenen Anlage einfließen können, abgebildet wird. Unter dem Begriff Planung ist also keineswegs nur eine initiale, vor einem ersten Bau einer Anlage erfolgende Planung zu verstehen sondern auch eine Planung jeglicher Art etwaiger Änderung(en) einer bereits vorhandenen, ggf. schon im Betrieb befindlichen Anlage, die auf einer bereits durchgeführten Planung aufbauen oder erstmalig durchgeführt werden kann. Unter Änderungen können beispielsweise Änderungen der Hardware der Anlage oder auch Änderungen eines Prozessablaufes zu verstehen sein.

Unter der Freigabe von Daten ist zu verstehen, dass Zugriffsrechte für die jeweiligen Anlagendaten vergeben werden, so dass einem externen Dienstleister beispielsweise das Lesen und gegebenenfalls die Weiterverarbeitung von in einer Cloud bereitstehenden Anlagendaten erlaubt wird.

Unter dem Anlagenbetreiber ist der Eigentümer der Anlagendaten zu verstehen, der die Herrschaft über die Anlagenplanung und/oder, sofern vorhanden, eine zugehörige reale Anlage hat. Auch wenn (noch) keine reale Anlage existiert, also noch kein Betrieb einer realen Anlage erfolgt, wird der Begriff Anlagenbetreiber für den Dateneigentümer verwendet. Bei dem Anlagenbetreiber kann es sich beispielsweise um ein eine Anlage planendes bzw. betreibendes Unternehmen handeln.

Es ist klar dass, wenn im Rahmen des erfindungsgemäßen Verfahrens davon gesprochen wird, dass der Anlagenbetreiber einen oder mehrere Schritte absolviert, diese etwa von einem oder mehreren insbesondere in die Anlagenplanung und/oder den Anlagenbetrieb involvierte Mitarbeiter beispielsweise eines anlageplanenden Unternehmens absolviert werden können.

Bei einem externen Dienstleister kann es sich prinzipiell um einen beliebigen Dritten handeln, der in der Regel unternehmensfremd ist und daher unter normalen Umständen keinen Zugriff auf die dem Anlagenbetreiber gehörigen Anlagendaten hat. Es kann sich insbesondere um einen unternehmensfremden Anwendungsentwickler handeln.

Erfindungsgemäß wird seitens eines oder mehrerer Dienstleister wenigstens ein Optimierungsvorschlag erarbeitet und dem Anlagenbetreiber unterbreitet. Dabei kann ein Optimierungsvorschlag prinzipiell alles umfassen, was dem Anlagenbetreiber einen wie auch immer gearteten Nutzen bietet. Rein beispielshaft sei genannt, dass ein Dienstleister auf Basis ihm freigegebener Anlagendaten eine verbesserte Anwendung etwa zur Anlagensteuerung entwickelt und anbietet oder auch ein Angebot für alternative und/oder ergänzende Hardware oder auch ein Wartungskonzept unterbreitet. Insbesondere ist vorgesehen, dass wenigsten ein externer Dienstleister wenigstens einen Optimierungsvorschlag unter Verwendung einer ihm gehörenden Anwendung erstellt.

Von dem Anlagenbetreiber wird dann insbesondere unter Rückgriff auf wenigstens einen unterbreiteten Optimierungsvorschlag eine Planung für die Anlage durchgeführt und/oder es wird die Anlage unter Rückgriff auf wenigstens einen unterbreiteten Optimierungsvorschlag betrieben. Wird ein Optimierungsvorschlag beispielsweise durch eine von einem externen Dienstleister unter Rückgriff auf freigegebene Anlagendaten entwickelte Anwendung gebildet bzw. umfasst ein Optimierungsvorschlag eine solche, kann auf die entwickelte Anwendung für die Planung und/oder den Betrieb zurückgegriffen werden.

Die Bereitstellung von Anlagendaten in der Cloud kann dadurch erfolgen, dass von einem lokal bei dem Anlagenbetreiber vorgesehenen Datenspeicher oder Datenspeichernetz Anlagendaten an einen Cloud-Speicherort übermittelt werden. Es ist es auch möglich, dass Anlagendaten direkt in der Cloud generiert werden, insbesondere unter Verwendung wenigstens eines dann bevorzugt ebenfalls in der Cloud bereitstehenden Planungswerkzeuges. Bei der Generierung direkt in der Cloud ist ein Hochladen nicht mehr erforderlich.

Die Übertragung insbesondere von realen Anlagendaten, etwa Mess- und/oder Stellwerten einer im Betrieb befindlichen Anlage in die Cloud kann mittels ohnehin in einer Anlage vorhanden Hardware, die beispielsweise mit einem externen Netzwerk, insbesondere dem Internet verbunden ist, und auf der dann zweckmäßiger Weise geeignete Software installiert ist, erfolgen. Die Übertragung kann beispielsweise über ein vorhandenes Leitsystem und/oder über Komponenten der Automatisierung erfolgen. Es kann auch zusätzliche Hardware, beispielsweise eine zusätzliche Auswerteeinheit bereitgestellt werden, über welche Anlagendaten in die Cloud übertragen werden.

Gemäß einer bevorzugten Ausführungsform des erfindungsgemäßen Verfahrens ist vorgesehen, dass der Anlagenbetreiber in wenigstens einem Anlagendokument eines für die Planung der Anlage verwendeten Planungswerkzeugs Anlagendaten markiert, und die markierten Anlagendaten für einen oder mehrere externe Dienstleister freigegeben werden, wobei das wenigstens eine Anlagendokument dem Anlagenbetreiber insbesondere über eine Oberfläche des zugehörigen Planungswerkzeugs grafisch dargestellt wird. Bei dem wenigstens einen Anlagendokument handelt es sich insbesondere um wenigstens ein Fließschema, bevorzugt ein Rohrleitungs- und Instrumentenfließschema der Anlage, und/oder wenigstens eine Anlagendaten-Tabelle.

Es kann weiterhin vorgesehen sein, dass der Anlagenbetreiber in wenigstens einem Fließschema wenigstens ein mehrere Anlagendaten einschließendes Polygon markiert, und von dem wenigstens einen Polygon eingeschlossene Anlagendaten für einen oder mehrere externe Dienstleister freigegeben werden.

Besonders bevorzugt wird wenigstens eine Freigabeanwendung insbesondere in der Cloud bereitgestellt, die ausgebildet und eingerichtet ist, um in Reaktion auf eine Markierung von Anlagendaten durch den Anlagenbetreiber in einem Anlagendokument markierten Anlagendaten für einen oder mehrere externe Dienstleister freizugeben.

Die Auswahl von freizugebenden Anlagendaten kann besonders komfortabel in den Anlagendokumenten eines oder mehrerer für die Anlagenplanung herangezogener Planungswerkzeuge erfolgen. Bei einem Anlagedokument kann es sich beispielsweise um ein Übersichtsdokument in Form eines Fließschemas, wie etwa ein P&ID (Process and Instrumentation Diagramm, deutsch: Rohrleitungs- und Instrumentenfließschema) der Anlage handeln, welches eine vollständige Anlage oder auch nur einen Teil einer solchen zeigt. In einem Fließschema stehen die einzelnen Anlagedaten insbesondere in Form von Objekten besonders übersichtlich im Gesamtkontext der Anlage bzw. eines Teils einer solchen zur Verfügung und der Anlagenbetreiber kann sehr komfortabel, zügig und sicher entscheiden, welche Daten, insbesondere Objekte, er freigeben will oder auch muss, um für bestimmt Aspekte seiner Anlage Optimierungsvorschläge erhalten zu können.

Wird die Entscheidung über die Freigabe von Anlagendaten unter Heranziehung eines Fließschemas getroffen, kann dabei besonders bevorzugte die Polygontechnik zum Einsatz kommen, gemäß derer der Anlagenbetreiber dann wenigstens ein mehrere Daten, insbesondere Objekte einschließendes Polygon in einem graphisch dargestelltes Fließschema einzeichnet. Die Polygontechnik erlaubt eine ganz besonders effiziente auch massenhafte Freigabe von Anlagendaten und dies, da ein Fließschema eine Vielzahl von Anlagendaten, insbesondere Anlagenobjekten im verknüpften, verfahrenstechnisch eingebundenen Zustand zeigt, der über die grafische Darstellung sehr intuitiv erfassbar ist, maximal anlagenkontextbezogen.

Die Markierung in einem Fließschema und/oder einer Tabelle ist etwa unter Verwendung eines Touchscreens und zugehörigen geeigneten Stiftes oder auch Verwendung eines normalen Bildschirms in Kombination mit einer Tastatur und/oder einer Maus komfortabel und zügig möglich.

Alternativ oder zusätzlich kann eine Auswahl auch in einer oder mehrere Tabellen mit Anlagendaten erfolgen, in der bzw. denen Daten ebenfalls in besonders übersichtlicher Weise und in der Regel Anlagen-kontextbezogen darstellbar sind, so dass eine komfortable und sichere Freigabe möglich ist.

Unabhängig davon, auf welche Form von Anlagedokumenten für die Auswahl zurückgegriffen wird, ist bevorzugt wenigstens eine Freigabeanwendung bereitgestellt, welche ausgebildet und eingerichtet ist, um in Reaktion auf eine benutzerseitige Markierung von Anlagendaten, insbesondere Anlagenobjekten automatisch Zugriffsrechte für die markierten Daten zu vergeben, die den Zugriff durch externe Dienstleister ermöglichen. Kommt die Polygontechnik zum Einsatz, kann ein einfaches Programm oder Skript als Freigabeanwendung breitgestellt werden, mit dem innerhalb eines eingezeichneten Polygons liegende Objekte ermittelt und anschließend Zugriffsrechte für diese automatisch geändert werden.

Es versteht sich, dass für den Fall, dass mehreren externen Dienstleistern ein Zugriff gewährt werden soll, verschiedenen Dienstleister verschieden Zugriffsrechte auf die Daten gewährt und/oder Zugriff auf verschiedene Daten gewährt bekommen können, wobei dann eine entsprechende Auswahl vom Dateneigentümer getroffen wird.

Es kann etwa für eine Mehrzahl von externen Dienstleistern eine entsprechende Anzahl von Cloud-Benutzern angelegt werden, und dann insbesondere den jeweiligen Cloud-Benutzern freigegebene Anlagedaten mit jeweils zugehörigen Zugriffsrechten zugeordnet werden.

Die Einrichtung von Benutzern sowie Zugriffsrechten ist aus dem Stand der Technik bekannt und steht in am Markt befindlichen Planungswerkzeugen, beispielsweise "COMOS" bereits prinzipiell zur Verfügung.

Eine weitere ganz besonders bevorzugte Ausführungsform des erfindungsgemäßen Verfahrens zeichnet sich dadurch aus, dass wenigstens eine Anfrageanwendung insbesondere in der Cloud bereitgestellt wird, welche derart ausgebildet und eingerichtet ist, dass einer oder mehrere externe Dienstleister über diese beim Anlagenbetreiber die Freigabe weiterer Anlagedaten insbesondere unter Angabe einer Begründung anfragen können.

Dies ermöglicht insbesondere eine komfortable und effiziente Interaktion in Bezug auf den Freigabeumfang zwischen Anlagenbetreiber und externem Dienstleister bzw. externen Dienstleistern. Es wird insbesondere eine Austauschbasis zur Entwicklung von innovativen Anwendungen basierend auf Anlagendaten geschaffen.

Steht dem oder den Dienstleistern die Möglichkeit zur Verfügung, eine Erweiterung der Freigabe insbesondere unter Angabe von Gründen anzufordern, kann ferner auch ein schrittweises "herantasten" an einen für einen Optimierungsvorschlag erforderlichen Freigabeumfang erfolgen. Der Anlagenbetreiber wird in der Regel bestrebt sein, nur so viel absolut nötig von seiner Anlage preiszugeben. Besteht die Anfragemöglichkeit seitens der Dienstleister, kann in einem ersten Schritt eher wenig offengelegt und auf eine Anfrage gewartet werden. Da eine solche insbesondere von einer Begründung begleitet ist, der Dienstleister etwa bereits mitteilt, in welche Richtung sein Optimierungsvorschlag geht und warum er dazu weitere Angaben benötigt, kann der Anlagenbetreiber besonders gut abwägen, ob er eine weitere Freigabe für gerechtfertigt hält bzw. ihm die Sache eine Erweiterung wert ist. Das Vorhandensein einer Anfragemöglichkeit erlaubt auch einen besonders individuellen, auf einzelne Dienstleister zugeschnitten Freigabeumfang. Wird beispielsweise in einem ersten Schritt nur in sehr reduziertem Maße eine Freigabe erteilt, werden verschiedene Dienstleister tendenziell verschiedene weitere Daten - insbesondere mit Begründung - anfordern, so dass sich automatisch eine individuelle Struktur ergibt und kein Dienstleister Zugriff auf Daten erhält, die er nicht wirklich braucht, um dem Anlagenbetreiber einen Nutzen zu verschaffen.

Bevorzugt ist weiterhin vorgesehen, dass einer oder mehrere externe Dienstleister, denen insbesondere bereits Anlagendaten freigegeben wurden, über die Anfrageanwendung die Freigabe weitere Anlagendaten anfragen.

Die wenigstens eine Anfrageanwendung zeigt bevorzugt einem oder mehreren Dienstleistern bereits freigegebene Anlagendaten in wenigstens einem Anlagendokument aus einem für die Planung der Anlage verwendeten Planungswerkzeug, insbesondere in wenigstens einem Fließschema, bevorzugt einem Rohrleitungs- und Instrumentenfließschema der Anlage, und/oder in wenigstens einer Anlagendaten-Tabelle, an. Das wenigste eine Anlagendokument enthält dann insbesondere nicht freigegebene Daten in unkenntlicher Darstellung, und einer oder mehrere Dienstleister markieren in dem wenigstens einen Anlagendokument nicht freigegebene Anlagendaten und dem Anlagenbetreiber wird eine Anfrage übermittelt, ob die markierten Anlagendaten freigegeben werden. Hierdurch wird auch dienstleisterseitig eine Anlagenkontext-bezogene Auswahl möglich.

Erfolgt auch die Dienstleister-seitige Anfrage zur Freigabe (zusätzlicher) Anlagendaten in einem oder mehreren Anlagendokument(en) eines oder mehrerer Planungswerkzeuge(s), bestehen die gleichen Vorteile, u.a. einer besonders anlagenkontextbezogenen sowie effizienten Auswahl, die vorstehend bereits zur Anlagenbetreiber-seitigen Datenauswahl genannt wurden. Auch wenn ein Dienstleister beispielsweise in einem Fließschema, etwa einem P&ID nur einen Teil, nämlich die ihm freigegebenen Anlagedaten sehen kann und der Rest des Fließschemas beispielsweise ausgegraut ist, kann der Dienstleister ein Kontextverständnis erhalten, welches für die Entwicklung seiner Lösung förderlich, gegebenenfalls sogar zwingend erforderlich sein kann. Reichen die Anlagendaten nicht aus, kann der Dienstleister im Anlagendokument, etwa Fließschema, weitere Anlagendaten, insbesondere angrenzende Objekte auswählen. Hierzu kann der nicht freigegebene Bereich eines Fließschemas in einzeln auswähl- und somit anfragbare Bereiche, etwa Kacheln unterteilt sein.

Hat ein Dienstleister die Freigabe weiterer Anlagendaten angefragt und insbesondere eine zugehörige Begründung übergeben, kann der Anlagenbetreiber der Freigabe zustimmen oder diese ablehnen.

Die wenigstens eine Anfrageanwendung bildet insbesondere einen Teil wenigstens eines zur Planung der Anlage verwendeten Planungswerkzeugs. Alternativ oder zusätzlich kann sie in der Cloud bereitgestellt sein bzw. werden.

In Weiterbildung wird die Planung der Anlage mittels wenigstens eines in der Cloud zur Verfügung stehenden Planungswerkzeuges durchgeführt.

Weiterhin kann vorgesehen sein, dass der Anlagenbetreiber einem oder mehreren externen Dienstleistern in einem eingeschränkten Maße Zugriff auf wenigstens ein insbesondere in der Cloud bereitstehendes Planungswerkzeug gewährt, welches er für eine Planung der Anlage verwendet hat.

Dann kann u.a. eine kontextbezogene Darstellung freigegebener Anlagendaten in der Umgebung des wenigstens einen Planungswerkzeugs erfolgen, auf welches wenigstens ein Dienstleister (beschränkt) Zugriff hat und/oder die Interaktion zwischen Anlagenbetreiber und externem Dienstleister bzw. externen Dienstleistern kann über das wenigstens eine Planungswerkzeug, auf das dienstleisterseitig zugegriffen werden kann, erfolgen. Das wenigstens eine Planungswerkzeug, auf das Zugriff gewährt wird, steht dann bevorzugt in der Cloud zur Verfügung, was einen besonders bequemen beiderseitigen Zugriff ermöglicht.

Eine weitere Ausführungsform des erfindungsgemäßen Verfahrens zeichnet sich dadurch aus, dass in der Cloud sowohl freigegeben als auch nicht freigegebene Anlagendaten, insbesondere sämtliche Anlagendaten bereitgestellt werden, und diejenigen Anlagendaten, welche der Anlagenbetreiber einem oder mehreren externen Dienstleistern freigeben möchte in der Cloud insbesondere unter Verwendung wenigstens eines für die Planung der Anlage verwendeten Planungswerkzeugs, das bevorzugt ebenfalls in der Cloud bereitsteht, mit einer Freigabeerklärung verknüpft werden.

Es kann sein, dass nur ein Teil der Anlagendaten in der Cloud verfügbar ist oder auch der sämtliche Anlagendaten verfügbar sind. In ersterem Falle können alle verfügbaren Daten freigegebene Daten sein, die überhaupt erst aufgrund der Freigabe in der Cloud zur Verfügung gestellt wurden. Insbesondere dann, wenn in der Cloud sowohl Anlagendaten zur Verfügung stehen, auf die einer oder mehrere Dienstleister zugreifen dürfen als auch solche, für die dies nicht gilt, kann den Daten auch in der Cloud eine Freigabeerklärung zugeordnet werden.

Die Zuordnung der Freigabe und der Daten kann dann in bevorzugter Ausgestaltung über durch insbesondere bereits im Rahmen der Planung der Anlage vergebene TAG-Nummern erfolgen, die den verschiedenen Anlagendaten, insbesondere Anlagenobjekten zugeordnet sind. Die TAG-Nummern sind insbesondere in der Planung und der Anlage identisch. Eine solche Identifikation ist bevorzugt Teil der integrierten Planung und wird zwischen Planungswerkzeug(en) und Anlagenkomponenten bzw. Leitsystem ausgetauscht und konsistent gehalten.

Weitere Merkmale und Vorteile der vorliegenden Erfindung werden anhand der nachfolgenden Beschreibung eines Verfahrens gemäß einer Ausführungsform der vorliegenden Erfindung unter Bezugnahme auf die beiliegende Zeichnung deutlich. Darin ist
Figur 1 ein rein schematisches Blockbild, welches die Freigabe von Anlagendaten von einer Anlage in einer Cloud an drei externe Dienstleister und visualisiert,
Figur 2 ein rein schematisches Blockbild, welches die Anlage, Cloud und die drei externen Dienstleister aus Figur 1 sowie das in der Cloud bereitgestellte Planungswerkzeug zeigt
Figur 3 einen Auszug eines Rohrleitungs- und Instrumentenfließschema der Anlage aus Figur 1,
Figur 4 eine Tabelle mit Anlagendaten,
Figur 5 eine rein schematische Skizze eines Teils der lokalen Anlagen- bzw. IT-Struktur des Anlagenbetreibers der Anlage aus Figur 1 und die Datenübertragung in die Cloud zeigt,
Figur 6 der Auszug des Rohrleitungs- und Instrumentenfließschema aus Figur 2 mit einem Polygon, das freigegebenen Anlagendaten einschließt, und
Figur 7 freigegeben Anlagendaten aus dem Rohrleitungs- und Instrumentenfließschema aus Figur 3 aus Sicht eines externes Dienstleisters.

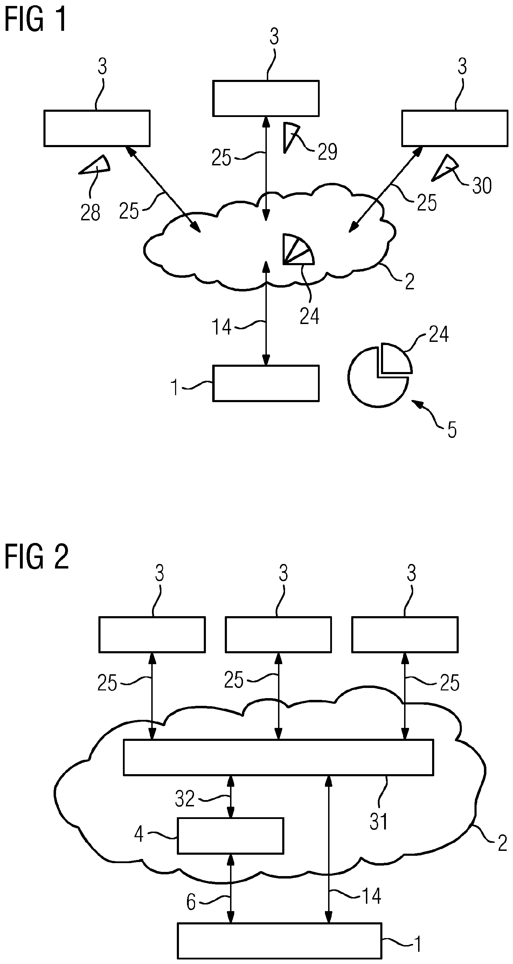

Die Figur 1 zeigt in rein schematischer Blockbildstellung eine verfahrenstechnische Anlage 1, eine Cloud 2 und insgesamt drei externe Dienstleister 3.

Bei dem beschriebenen Ausführungsbeispiel handelt es sich bei der Anlage 1 um eine bereits existierende, im Betrieb befindliche Anlage 1, für die in einem ersten Schritt des erfindungsgemäßen Verfahrens von einem in den Figuren nicht dargestellten Anlagenbetreiber mittels eines softwarebasiertem Planungswerkzeugs 4 eine Planung durchgeführt wurde. Das softwarebasierte Planungswerkzeug 4 ist in der Figur 1 nicht dargestellt, jedoch in dem weiteren Blockschaltbild aus Figur 2, welches ebenfalls die Anlage 1, Cloud 2 sowie die externen Dienstleister 3 zeigt, entnommen werden. Wie aus der Figur 2 hervorgeht, steht das Planungswerkzeug 4 in der Cloud 2 bereit. Bei dem vorliegenden Beispiel handelt es sich bei dem Planungswerkzeug 4 um die von der Anmelderin vertriebene Plant Engineering Software COMOS.

In der Figur 1 weiterhin gezeigt, konkret repräsentativ durch einen Vollkreis dargestellt, sind zu der Anlage 1 gehörende Anlagendaten 5. Bei diesen handelt es sich vorliegend sowohl um Daten, die im Rahmen der mittels des softwarebasierten Planungswerkzeuges 4 durchgeführten Planung der Anlage 1 erhalten wurden bzw. werden, als auch um während des Betriebes der Anlage 1 u.a. messtechnisch erfasste Daten, insbesondere Runtime-Daten.

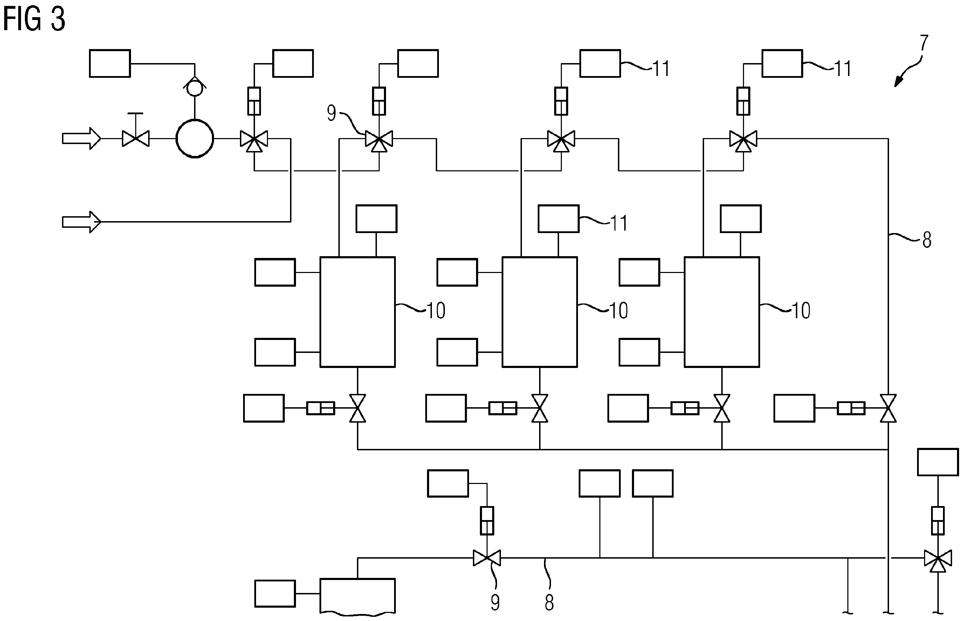

Es sei betont, dass das Planungswerkzeug 4 nicht nur für eine initiale, vor dem Bau der Anlage 1 erfolgte Planung dieser herangezogen wird bzw. wurde, sondern auch während des gesamten Lebenszyklus Anlage 1 "mitläuft", um die Anlage, insbesondere auch etwaige Reparaturen, Änderungen etwa Umbauten oder dergleichen abzubilden. Es findet bei dem beschriebenen Ausführungsbeispiel während des gesamten Lebenszyklus der Anlage 1 ein Abgleich zwischen dem Planungswerkzeug 4 und der Anlage 1 statt, was in der Figur 3 durch einen Pfeil 6 zwischen Planungswerkzeug 4 und Anlage 1 angedeutet ist.

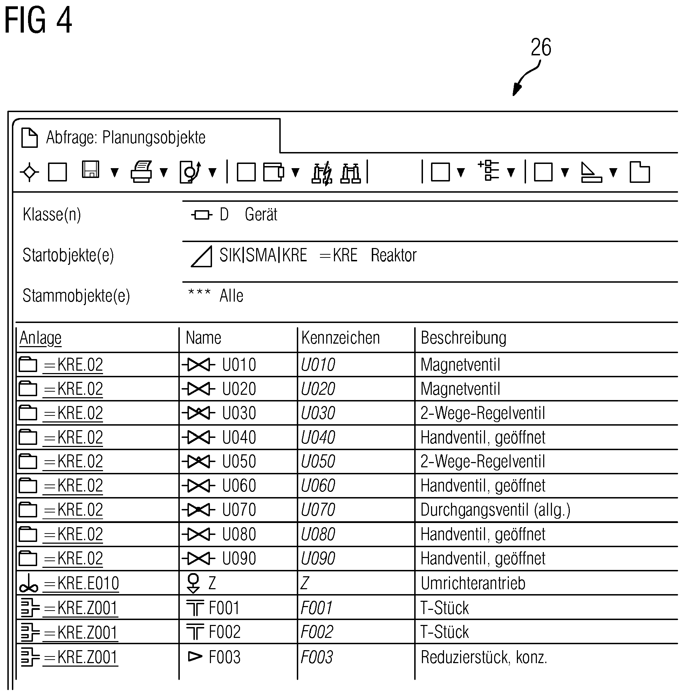

Bei den Anlagendaten 5, die im Rahmen der Planung mittels des Planungswerkzeuges 4 erhalten wurden bzw. werden, handelt es sich u.a. um ein Anlagendokument in Form eines Rohrleitungs- und Instrumentenfließschemas 7 der Anlage 1, von dem Ausschnitt rein schematisch in der Figur 3 dargestellt ist. Es handelt sich dabei um ein solches Rohrleitungs- und Instrumentenfließschema 7, auch P&ID genannt, wie es aus dem Stand der Technik für Anlagen hinlänglich bekannt ist und welches alle für den Betrieb einer Anlage erforderlichen Bauteile, u.a. Rohrleitungen 8, Ventile 9, Behälter 10, sowie PLT-Stellen 11 umfasst. Die Anlagendaten 5 umfassen u.a. weitere der Planung entstammende Anlagendokumente, wie etwa Anlagendaten-Tabellen 12, von denen eine rein beispielhaft und schematisch in der Figur 4 dargestellt ist. Es sei angemerkt, dass von dem Planungswerkzeug 4 Anlagendaten 5 insbesondere in Form von Objekten gespeichert werden.

Bei im Rahmen des Betriebs der Anlage 1 erfassten Anlagendaten 5 handelt es sich insbesondere um dynamische Daten, die in den feldnahmen Komponenten der Anlage 1 entstehen, zu denen die PLT-Stellen also die Messwerte vorhandener Sensoren sowie Stellwerte vorhandener Aktoren zählen.

Im Rahmen des erfindungsgemäßen Verfahrens wird zumindest ein Teil der Anlagedaten 5 in der Cloud 2 bereitgestellt. Konkret stehen sämtlich über die Planung mittels des in der Cloud 2 bereitstehenden Planungswerkzeugs 4 erhaltenen Anlagendaten 5 in der Cloud 2 bereit und von den Anlagendaten 5, die während des Betriebes der Anlage 1 erfasst werden, wird ein Teil in die Cloud 2 hochgeladen. In den Figuren 1 und 2 ist dies schematisch durch den Pfeil 12 zwischen der Cloud 2 und der Anlage 1 verdeutlicht.

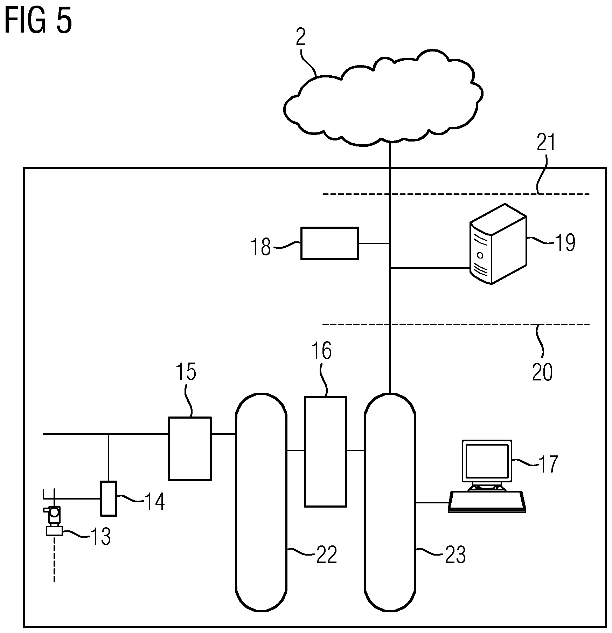

Die vorliegende Übertragung realer Mess- und Stellwerte aus der Anlage in die Cloud 2 ist in der Figur 5 - wiederum rein schematisch - verdeutlicht. In dieser sind ein Teil der lokalen Anlagen- bzw. IT-Struktur des Anlagenbetreibers und die Datenübertragung in die Cloud 2 skizziert. Gezeigt sind Sensoren/Aktoren 13, dezentrale Peripherie 14, eine Anlagensteuerung 15, die bei dem hier beschriebenen Ausführungsbeispiel durch das von der Anmelderin angebotene Automatisierungssystem SIMATIC AS 410 gegeben ist, einen Computer 16, auf welchem eine Operator Station Software installiert ist, ein Client 17, eine Auswerteeinheit als Hardware 18 sowie ein Auswerteinheit als Software 19. Die Auswerteeinheiten 18 und 19 sind zwischen einer ersten, inneren Firewall 20 und einer zweiten, äußeren Firewall 21 angeordnet. Es ist ferner ein Plant Bus 22 (Industrial Ethernet) und ein Terminal Bus 23 (Industrial Ethernet) erkennbar.

Die Datenübertragung ist derart, dass Stellwerte von Aktoren und/oder Messwerte von Sensoren von der Steuerung 15 über den Plant Bus 22 an den Computer 16 mit der Operator Station Software und von dort über den Terminal Bus 23 an die Auswerteeinheiten 18 und 19, bei denen es sich vorliegend um Cloud-Gateways handelt, in die Cloud 2 übertragen werden. Die Übertragung der Daten 5 erfolgt über das Leitsystem, welches bei dem beschriebenen Ausführungsbeispiel die von der Anmelderin angebotene Prozessleitsystem-Software SIMATIC PCS 7 umfasst, und die Automatisierungskomponenten, die vorliegend durch das vorgenannte, ebenfalls von der Anmelderin angebotene Automatisierungssystem SIMATIC AS 410 gegeben sind. Das Leitsystem umfasst entsprechend Software und Hardware.

Alternativ oder zusätzlich dazu, dass eine zusätzliche Auswerteeinheit 18 bzw. 19 zum Einsatz kommt, kann die Datenübertragung in die Cloud 2 auch über eine auf dem Computer 16 mit der Operator Station installierte Software erfolgen.

Von den in der Cloud 2 bereitstehenden Anlagendaten 5 wird ein Teil 24 (vgl. Figur 1) durch den Anlagenbetreiber derart freigegeben, dass von einem oder mehreren, bei dem dargestellten Ausführungsbeispiel von insgesamt drei externeren Dienstleistern 3 auf diesen freigegebene Anlagendaten 5 zugegriffen werden kann. Dies ist in den Figuren 1 und 2 durch jeweils einen weiteren Pfeil 25 zwischen der Cloud 2 und dem jeweiligen externen Dienstleister 3 dargestellt.

Dabei wählt der Anlagenbetreiber erfindungsgemäß in dem zur Planung der Anlage 1 verwendeten, in der Cloud 2 bereitstehenden Planungswerkzeug 4 aus, welche Anlagendaten 5 für externe Dienstleister 3 freigegeben werden. Dies ist besonders vorteilhaft, da die Semantik der Daten im Kontext der Anlage 1 im Planungswerkzeug 4, insbesondere Anlagendokumenten dieses hinterlegt ist. Die erfindungsgemäße Datenfreigabe für die Cloud 2 im Planungswerkzeug 4 ermöglicht daher eine besonders komfortabel, zweckmäßig sowie sichere auch massenhafte Datenfreigabe im Kontext der Anlage 1 ohne dass der Anlagenbetreiber dabei die Übersicht verliert.

Bei dem dargestellten Ausführungsbeispiel wird hierzu auf das Rohrleitungs- und Instrumentenfließschema 7 der Anlage 1 (vgl. Figur 3) sowie Anlagen-Tabellen 26 (vgl. Figur 4) zurückgegriffen, die hierzu einem Mitarbeiter des Anlagenbetreibers innerhalb der Oberfläche des Planungswerkzeuges 4 visualisiert werden, etwa auf dem Client 17 (vgl. Figur 5). Von den Anlagedaten-Tabellen 26 ist in der Zeichnung nur eine rein beispielhaft und schematisch in Figur 4 gezeigt.

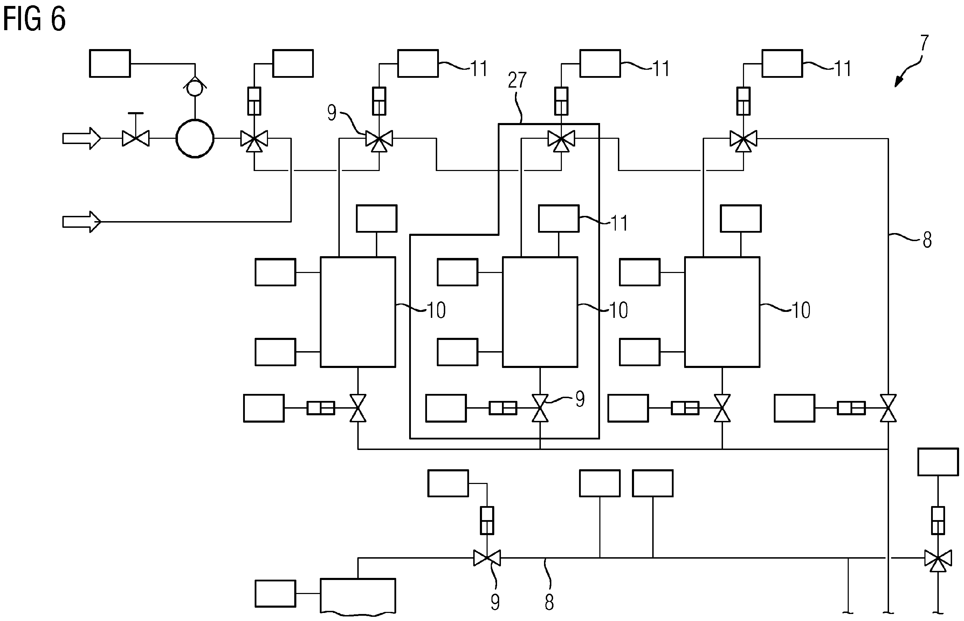

Zur Auswahl freizugebender Anlagendaten 5 in dem Fließschema 7 wird bei dem Ausführungsbeispiel konkret die Polygontechnik genutzt, wobei seitens des Anlagenbetreibers in dem Rohrleitungs- und Instrumentenfließschema 7 der Anlage 1 ein mehrere Anlagenobjekte einschließendes Polygon 27 eingezeichnet wird. Das (ausschnittsweise dargestellte) Fließschema 7 mit einem zur Auswahl des Datenfreigabeumfangs eingezeichnetem Polygon 27 ist in der Figur 6 gezeigt. Die Markierung des Polygons 27 in dem Fließschema 7 kann auf einfache Weise mittels einer Maus an einem Computerbildschirm, etwa des Clients 17 erfolgen.

Mit Hilfe eines einfachen, als Freigabeanwendung dienenden Programms bzw. Skriptes werden dann alle innerhalb des Polygons 27 liegende, in Form von Objekten abgespeicherte Anlagendaten 5 bestimmt und es werden automatisch entsprechende Zugriffsrechte für diese vergeben. Die Rechtevergabe kann unter Rückgriff auf ohnehin im Rahmen des Planungswerkzeugs 4 zur Verfügung stehende Rechte-vergabe-Tools erfolgen. Die Software COMOS verfügt prinzipiell bereits über Systeme und Prozesse zur Vergabe von Rechten an Nutzer. Dabei können jedem Objekt in den Anlagendaten 5 für die jeweiligen Nutzer Rechte zugeordnet werden. Im Rahmen der bestehenden Rechtevergabemöglichkeit können beispielsweise drei Cloud-User definiert und an diese entsprechende Zugriffsrechte für die im Planungswerkzeug 4 ausgewählten Anlagendaten 5 vergeben werden.

Neben der Auswahl in dem Fließschema 7 findet eine Auswahl auch in Anlagen-Tabellen 26 statt, in denen seitens des Anlagenbetreibers bestimmte Einträge in an sich bekannter Weise markiert werden. Die bereitstehende Freigabeanwendung vergibt dann auch in Reaktion auf die Auswahl innerhalb einer Tabelle 26 entsprechende Zugriffsrechte unter Rückgriff auf ein Benutzerrechte-Tool des Planungswerkzeuges 4.

Bei dem dargestellten Ausführungsbeispiel ist die Rechtevergabe konkret so, dass der Anlagenbetreiber jedem der drei externen Dienstleister 3 durch entsprechende Auswahl innerhalb der Planungswerkzeuges 4 einen anderen Ausschnitt aus 28, 29, 30 aus den Anlagendaten 5 freigibt. Das Polygon 27 aus Figur 6 repräsentiert beispielshaft die Freigabe im Fließschema 7 für einen der Dienstleister 3. Dies ist in Figur 1 schematisch dadurch verdeutlicht, dass der Teil 24 der Anlagedaten 5, der insgesamt freigegeben wurde als in der Cloud 2 liegender Viertelkreisausschnitt dargestellt ist, während jedem der drei externen Dienstleister 3 ein tortenstückförmiges Drittel des Viertelkreises zugeordnet ist.

In der Cloud 2 werden die Anlagendaten 5, welche freizugeben sind, mit den Informationen über die Freigabe aus dem Planungswerkzeug 4 gekoppelt. Die Verknüpfung von Anlagendaten 5 und Freigabe sowie selektive Weitergabe dieser ist in der Figur 2 durch das Blockbildelement 31 angedeutet. Die Weitergabe von Anlagendaten aus der Anlage 1 ist - wie vorstehend bereits angemerkt - durch den Pfeil 14 angedeutet. Die Freigabe durch den Pfeil 32 zwischen der Anlage 1 und dem Blockbildelement 31.

Das beschriebene Ausführungsbeispiel des erfindungsgemäßen Verfahrens zeichnet sich weiterhin dadurch aus, dass eine dem Planungswerkzeug 4 zugeordnete Anfrageanwendung ebenfalls in der Cloud 2 bereitgestellt ist, die derart ausgebildet und eingerichtet ist, dass seitens der externen Dienstleister 3 über diese beim Anlagenbetreiber die Freigabe weiterer Anlagendaten 5 unter Angabe einer entsprechenden Begründung angefragt werden kann. Die in den Figuren nicht dargestellte Anfrageanwendung ist bevorzugt Teil des Planungswerkzeuges 4.

Insbesondere um eine einfache und effiziente Interaktion zwischen dem Anlagenbetreiber und den externen Dienstleistern 3, auch was die Anforderung der Freigabe weiterer Daten angeht zur ermöglichen ist es besonders vorteilhaft, dass das Planungswerkzeug 4, welches bei dem dargestellten Ausführungsbeispiel die Anfrageanwendung umfasst, in der Cloud 2 bereitsteht.

Damit einerseits den externen Dienstleistern 3 freigegebene Anlagendaten 5 kontextbezogen dargestellt werden können und andererseits eine besonders komfortable und effiziente Anforderung der Freigabe weiterer, noch nicht freigegebener Anlagendaten 5 erfolgen kann, wird den externen Dienstleistern 3 (beschränkter) Zugriff auf das Planungswerkzeug 4 gewährt, insbesondere ein Zugriff auf die Visualisierung freigegebener Anlagendaten 5 in einem Fließschema 7 und/oder Anlagendaten-Tabellen 12, in dem nicht freigegebene Anlagendaten 5 ausgegraut sind sowie Zugriff auf die Anfrageanwendung.

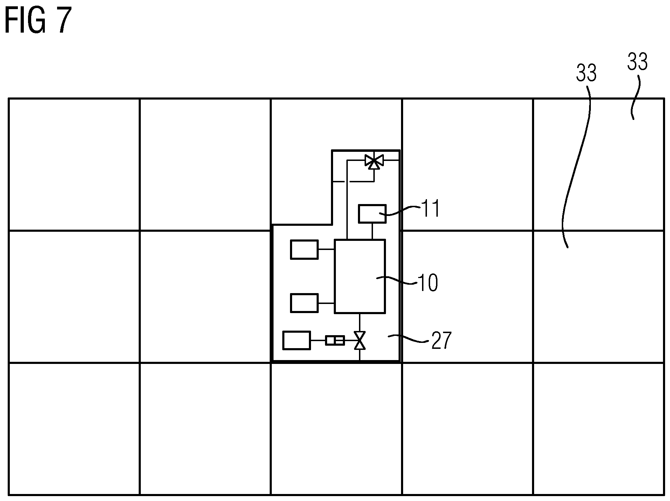

Ein Fließschema 7 aus Sicht eines externen Dienstleisters 3, welches zu der Freigabe durch Polygontechnik gemäß Figur 6 korrespondiert ist in Figur 7 gezeigt. Es sind nur die Objekte innerhalb des anlagenbetreiberseitig markierten Polygons 27 durch den Dienstleister 3 im Planungswerkzeug 4 einsehbar und alle anderen Bereiche werden dem Dienstleister 3 verdeckt dargestellt. Trotz des beschränkten Ausschnitts aus der gesamten Anlage 1 erhält der Dienstleister 3 ein Kontextverständnis.

Sollten die ihm freigegebenen Anlagendaten 5 nicht ausreichen, so kann er weitere z.B. angrenzende Objekte anfordern. Um dies besonders einfach und effizient zu ermöglichen, ist im Rahmen des hier beschriebenen Ausführungsbeispiels des erfindungsgemäßen Verfahrens vorgesehen, dass ihm der gesamte ausgeblendete Bereich des Fließschemas 7 in Kacheln 33 unterteilt angezeigt wird, die jeweils über eine Buchstabe-Zahl-Kombination identifizierbar sind (Kabel A1, A2, B1, B2 ...). Der Dienstleister kann bequem eine oder mehrere gewünschte Kacheln 33 auswählen und eine entsprechende Anfrage zusammen mit einer Begründung, warum die Freigabe dieser weiteren Anlagendaten 5 erforderlich bzw. gewünscht ist, wird an den Anlagenbetreiber, vorliegend über die Cloud 2 gesendet. Dieser kann einer angefragten Erweiterung der Freigabe zustimmen oder diese verweigern.

Dabei kann seitens des Anlagenbetreibers auch in jedem Einzelfall entschieden werden, ob die geforderte Erweiterung nur gegenüber demjenigen Dienstleister 3 erfolgt, welcher diese angefordert hat, oder - aus vom Einzelfall abhängigen Gründen -eine entsprechend erweiterte Freigabe auch für andere Dienstleister 3, etwas auch alle Dienstleister erfolgt.

Wenigstens ein externer Dienstleister 3 nutzt die ihm - ggf. auch erst in Reaktion auf eine Erweiterungsanfrage - freigegeben Anlagendaten 5, um auf Basis dieser wenigstens einen Optimierungsvorschlag für die Anlage 1 zu erarbeiten und diesen dem Anlagenbetreiber zu unterbreiten. Die Übermittlung des Optimierungsvorschlags bzw. der Optimierungsvorschläge erfolgt bevorzugt ebenfalls über die Cloud 2. Dabei kann der Optimierungsvorschlag bzw. können die Optimierungsvorschläge prinzipiell alles umfassen, was dem Anlagenbetreiber einen wie auch immer gearteten Nutzen bietet. Rein beispielshaft sei genannt, dass ein Dienstleister 3 auf Basis ihm freigegebener Anlagendaten 5 eine verbesserte Anwendung etwa zur Anlagensteuerung entwickelt und anbietet oder auch ein Angebot für alternative und/oder ergänzende Hardware oder auch ein Wartungskonzept unterbreitet.

Die Auswahl, welche Anlagendaten 5 freigegeben werden kann in der Umgebung des Planungswerkzeugs 4 besonders zügig und durch den Kontextbezug besonders intuitiv erfolgen. Eine auch massenhafte Datenfreigabe kann somit effizient erfolgen. Dabei hat der Anlagenbetreiber zu allen Zeiten die Herrschaft und eine gute Übersicht über seine Daten und Fehler werden vermieden, so dass -auch bei Rückgriff auf externe Ressourcen - ein hohes Maß an Sicherheit gewährleistet wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Planung und/oder zum Betreiben einer technischen Anlage (1), bei dem
- von einem Anlagenbetreiber mittels wenigstens eines softwarebasierten Planungswerkzeugs (4) eine Planung einer technische Anlage (1) durchgeführt wird,
- im Rahmen der Planung erhaltene und/oder während des Betriebs der Anlage erfasste Anlagendaten (5) in einer Cloud (2) bereitgestellt werden,
- zumindest ein Teil der in der Cloud (2) bereitgestellten Anlagendaten (5) von dem Anlagenbetreiber derart freigegeben wird, dass von einem oder mehreren externen Dienstleistern (3) auf diese zugegriffen werden kann, wobei der Anlagenbetreiber in wenigstens einem zur Planung der Anlage verwendeten Planungswerkzeug (4), insbesondere unter Verwendung wenigstens einer einen Teil des Planungswerkzeugs (4) bildenden Anwendung auswählt, welche Anlagendaten (5) freigegeben werden, und
- wenigstens ein externer Dienstleister (3) auf ihm in der Cloud (2) freigegebene Anlagendaten (5) zugreift und auf Basis freigegebener Anlagendaten (5) wenigstens einen Optimierungsvorschlag für die Anlage (1) erarbeitet, und den Optimierungsvorschlag an den Anlagenbetreiber insbesondere über die Cloud (2) übermittelt.

2. Verfahren nach Anspruch 1,
**dadurch gekennzeichnet, dass**
der Anlagenbetreiber in wenigstens einem Anlagendokument eines für die Planung der Anlage (1) verwendeten Planungswerkzeugs (4), insbesondere wenigstens einem Fließschema, bevorzugt einem Rohrleitungs- und Instrumentenfließschema (7) der Anlage (1), und/oder wenigstens einer Anlagendaten-Tabelle (26) Anlagendaten (5) markiert, und die markierten Anlagendaten (5) für einen oder mehrere externe Dienstleister (3) freigegeben werden, wobei das wenigstens eine Anlagendokument dem Anlagenbetreiber insbesondere über eine Oberfläche des zugehörigen Planungswerkzeugs (4) grafisch dargestellt wird.

3. Verfahren nach Anspruch 2,
**dadurch gekennzeichnet,**
**dass** der Anlagenbetreiber in wenigstens einem Fließschema (7) wenigstens ein mehrere Anlagendaten einschließendes Polygon (27) markiert, und von dem wenigstens einen Polygon (27) eingeschlossene Anlagendaten (5) für einen oder mehrere externe Dienstleister (3) freigegeben werden.

4. Verfahren nach einem der Ansprüche 2 oder 3,
**dadurch gekennzeichnet, dass**
wenigstens eine Freigabeanwendung insbesondere in der Cloud (2) bereitgestellt wird, die ausgebildet und eingerichtet ist, um in Reaktion auf eine Markierung von Anlagendaten (5) durch den Anlagenbetreiber insbesondere in einem Anlagendokument die markierten Anlagendaten (5) für einen oder mehrere externe Dienstleister (3) freizugeben.

5. Verfahren nach einem der vorhergehenden Ansprüche,
**dadurch gekennzeichnet, dass**
wenigstens eine Anfrageanwendung insbesondere in der Cloud (2) bereitgestellt wird, welche derart ausgebildet und eingerichtet ist, dass einer oder mehrere externe Dienstleister (3) über diese beim Anlagenbetreiber die Freigabe weiterer Anlagedaten (5) insbesondere unter Angabe einer Begründung anfragen können, wobei die wenigstens eine Anfrageanwendung bevorzugt einen Teil wenigstens eines für die Planung der Anlage (1) verwendeten Planungswerkzeugs (4) darstellt und/oder in der Cloud (2) bereitgestellt wird.

6. Verfahren nach Anspruch 5,
**dadurch gekennzeichnet, dass**
einer oder mehrere externe Dienstleister (3), denen insbesondere bereits Anlagendaten (5) freigegeben wurden, über die Anfrageanwendung die Freigabe weitere Anlagendaten (5) anfragen.

7. Verfahren nach Anspruch 5 oder 6,
**dadurch gekennzeichnet, dass**
die wenigstens eine Anfrageanwendung einem oder mehreren Dienstleistern (3) bereits freigegebene Anlagendaten (5) in wenigstens einem Anlagendokument aus einem für die Planung der Anlage (1) verwendeten Planungswerkzeug (4), insbesondere in wenigstens einem Fließschema, bevorzugt einem Rohrleitungs- und Instrumentenfließschema (7) der Anlage (1), und/oder in wenigstens einer Anlagendaten-Tabelle (26), anzeigt, wobei bevorzugt das wenigste eine Anlagendokument nicht freigegebene Anlagendaten (5) in unkenntlicher Darstellung enthält, und einer oder mehrere Dienstleister (3) in dem wenigstens einen Anlagendokument nicht freigegebene Anlagendaten (5) markieren und dem Anlagenbetreiber eine Anfrage übermittelt wird, ob die markierten Anlagendaten (5) freigegeben werden.

8. Verfahren nach einem der vorhergehenden Ansprüche,
**dadurch gekennzeichnet, dass**
wenigstens ein Planungswerkzeug (4) in der Cloud bereitgestellt wird, und insbesondere eine Planung der Anlage (1) mittels wenigstens eines in der Cloud (2) zur Verfügung stehenden Planungswerkzeuges (4) durchgeführt wird.

9. Verfahren nach einem der vorhergehenden Ansprüche,
**dadurch gekennzeichnet, dass**
der Anlagenbetreiber einem oder mehreren externen Dienstleistern (3) in einem eingeschränkten Maße Zugriff auf wenigstens ein insbesondere in der Cloud (2) bereitstehendes Planungswerkzeug (4) gewährt, welches er für eine Planung der Anlage (1) verwendet hat.

10. Verfahren nach einem der vorhergehenden Ansprüche,
**dadurch gekennzeichnet, dass**
in der Cloud (2) sowohl freigegeben als auch nicht freigegebene Anlagendaten (5), insbesondere sämtliche Anlagendaten (5) bereitgestellt werden, und diejenigen Anlagendaten (5), welche der Anlagenbetreiber einem oder mehreren externen Dienstleistern (3) freigeben möchte in der Cloud (2) insbesondere unter Verwendung wenigstens eines für die Planung der Anlage verwendeten Planungswerkzeugs (4), das bevorzugt ebenfalls in der Cloud (2) bereitsteht, mit einer Freigabeerklärung verknüpft werden.
